## Europäisches Patentamt
## European Patent Office
## Office européen des brevets

(19)

(11) Veröffentlichungsnummer: **0 093 936**
**B1**

(12)

# EUROPÄISCHE PATENTSCHRIFT

(45) Veröffentlichungstag der Patentschrift:
**08.01.86**

(51) Int. Cl.⁴: **C 08 F 14/06, C 08 F 2/18**

(21) Anmeldenummer: **83104034.0**

(22) Anmeldetag: **25.04.83**

(54) **Verfahren und Vorrichtung zur Herstellung von Vinylchloridpolymerisaten.**

(30) Priorität: **27.04.82 DE 3215624**

(43) Veröffentlichungstag der Anmeldung:
**16.11.83 Patentblatt 83/46**

(45) Bekanntmachung des Hinweises auf die Patenterteilung:
**08.01.86 Patentblatt 86/2**

(84) Benannte Vertragsstaaten:
**BE DE FR GB IT NL SE**

(56) Entgegenhaltungen:
**GB - A - 1 415 442**
**US - A - 4 110 527**

(73) Patentinhaber: **WACKER-CHEMIE GMBH,**
**Prinzregentenstrasse 22, D-8000 München 22 (DE)**

(72) Erfinder: **Kreilein, Kurt, Dr., Beethovenstrasse 21,**
**D-5024 Pulheim (DE)**
Erfinder: **Geschonke, Hans, Dr. Dipl.-Chem., Unterster**
**Weg 51, D-5024 Pulheim (DE)**
Erfinder: **Rummel, Wolfgang, Fliederweg 37,**
**D-5000 Köln 40 (DE)**
Erfinder: **Langhoff, Wolfgang, Löschenhofweg 23,**
**D-4150 Krefeld 11 (DE)**
Erfinder: **Wiemer, Hardo, Dipl.-Ing.,**
**Hermann-Ost-Strasse 5, D-5000 Köln 80 (DE)**

### Beschreibung

Die gegenwärtige Erfindung betrifft ein verbessertes Verfahren und eine verbesserte Vorrichtung zur Herstellung von Vinylchloridpolymerisaten, die für die Verwendung in Plastisolen besonders geeignet sind. Es ist bekannt, dass sich solche vielfach als Pasten-PVC bezeichnete Polymerisate besonders vorteilhaft durch die sogenannte Mikrosuspensionspolymerisation herstellen lassen.

Beispielsweise wird in der DE-C Nr. 1069387 (& US Nr. 2981722; & = zur selben Patentfamilie gehörend) ein solches Verfahren beschrieben. Das dortige Verfahren ist dadurch gekennzeichnet, dass zunächst die Monomerdispersion in der Weise hergestellt wird, dass nach Beendigung des Homogenisierens sich eine geringe Menge Monomer von der Oberfläche des Reaktionsgemisches absondert und abgetrennt wird, die Polymerisation wegen der Gefahr der Koaleszenz ohne Rühren in einem schlanken Autoklaven, allgemein als Röhrenautoklav bezeichnet, durchgeführt und am Ende der Polymerisation gegebenenfalls die entstandene feindisperse Dispersion durch Rühren aufgrund der dadurch hervorgerufenen Agglomeration vergröbert wird.

Das Polymerisat dieser mechanisch sehr wenig stabilen Dispersionen eignet sich besonders zur Herstellung von Pasten. Nachteilig bei diesem Verfahren ist jedoch die Tatsache, dass die Reaktionswärme nur durch Konvektion oder Wärmeleitung abgeführt wird — daher auch die Durchführung im Röhrenautoklaven mit grossem Oberflächen/Volumen-Verhältnis — und deshalb die Reaktionsgeschwindigkeit niedrig gehalten werden muss. Die Raum-Zeit-Ausbeute ist deshalb unbefriedigend. Ein weiterer Nachteil liegt in der bei diesem Verfahren auftretenden starken Wandbelagsbildung.

Versucht man die Wandbelagsbildung durch Steigerung der Stabilität der Monomerdispersion mittels Anwendung höherer Scherkräfte bei der Homogenisierung zu vermindern, so erkauft man diese Verbesserung durch eine Erhöhung des Anteils kleinerer Polymerisatteilchen im Produkt. Daraus hergestellte Pasten besitzen als Folge unerwünscht hohe Viskositäten. Auch die vom Energieverbrauch günstigere Aufarbeitung der Dispersionen auf Saugzellfiltern wird dadurch z. B. erschwert oder gar unmöglich gemacht. Andererseits wurde versucht, eine Stabilitätssteigerung der Monomeremulsion durch eine Erhöhung des Dispergierhilfsmittelanteils (Emulgatorenanteils) in der Polymerisationsrezeptur zu erreichen. Neben der dadurch bedingten Kostensteigerung wird aber auch die Feuchtigkeitsempfindlichkeit und Wasseraufnahme des Polymeren erhöht, was sich insbesondere bei der Verwendung der Pasten für Schutzüberzüge, Beschichtungen und zur Herstellung transparenter Formkörper negativ auswirkt.

Zwar konnten diese letztgenannten Probleme durch Einsatz bestimmter Copolymerisate ein- oder zweibasiger Carbonsäuren und bestimmter Emulgatoren bereits stark vermindert werden (vgl. dazu EP-A Nr. 16461, Wa 7862-V, deren Offenbarung voll auf das vorliegende Verfahren angewendet werden kann und daher als Teil der vorliegenden Anmeldung gelten soll), jedoch sind für heutige Massstäbe die Polymerisationszeit noch zu lang und insbesondere die Wandbeläge noch zu stark. Zwar ist in dieser Anmeldung auch beschrieben, dass gerührt werden kann, jedoch hat dies so vorsichtig zu erfolgen, dass das Schergefälle nicht zu hoch wird (z. B. mittels Einsatz eines Blattrührers). Dabei wird die Dispersion jedoch noch nicht in dem Masse umgewälzt, das für eine merkliche Verkürzung der Polymerisationszeit wünschenswert wäre. Abgesehen von den hohen Investitionskosten für solche Rührorgane und wegen der Gefahr, dass die Dispersion aufgrund auch nur kurzzeitig zu starker Rührung agglomeriert oder koaguliert (vgl. hierzu DE-C Nr. 1069387), ist bei einer solchen mechanischen Rührung eine aufwendige Regelung der Rührerdrehzahl über die Gesamtdauer der Polymerisation notwendig. Überdies unterliegt die Qualität der Polymerisate, die nach dem bekannten Verfahren hergestellt werden, Schwankungen, die heute vom Kunden nicht mehr toleriert werden.

Aufgabe der Erfindung war demnach, ein gegenüber dem Stand der Technik verbessertes Mikrosuspensionsverfahren zu finden, das Vinylchlorid-Polymerisate besserer und gleichmässigerer Qualität bei deutlich verkürzten Polymerisationszeiten mit höherer Raum-Zeit-Ausbeute liefert.

Diese Aufgabe wird in hervorragender Weise durch den Gegenstand der Erfindung erfüllt, der ein Verfahren zur Herstellung von Vinylchlorid (VC)-Polymerisaten durch Polymerisation von VC gegebenenfalls zusammen mit bis zu 30 Gew.-% mindestens eines mit VC copolymerisierbaren Monomeren nach dem Mikrosuspensionsverfahren betrifft. Das Verfahren wird im wesentlichen in drei Verfahrensschritten durchgeführt. Zunächst wird das Monomere(ngemisch) in Gegenwart von 0,1 bis 3 Gew.-% an üblichen Dispergierhilfsstoffen und von 0,001 bis 3 Gew.-% üblichen monomerlöslichen Radikalbildnern in Wasser dispergiert, wobei sich die Mengenangaben jeweils auf das Gesamtgewicht des Monomeren(gemisches) beziehen, dann wird die so erhaltene Dispersion in an sich bekannter Weise derart homogenisiert, dass Monomertröpfchen mit einem mittleren Durchmesser von 0,1 bis 3 µm entstehen. Schliesslich wird die so homogenisierte Dispersion bei erhöhtem Druck in stehendem Autoklaven bei erhöhter Temperatur polymerisiert.

Überraschenderweise tritt eine deutliche Verbesserung des Produktes hinsichtlich der Gleichmässigkeit mehrerer Chargen untereinander, hinsichtlich weiterer Reduktion von Wandbelag und Gries und hinsichtlich der Stabilität der Dispersion sowie eine aufgrund verbesserter Wärmeabfuhr und besserer Ausnützung der Kühlkapazität deutliche Reduktion der notwendigen Polymerisationsdauer und der damit verbundenen Reaktionscycluszeit des Polymerisationsautoklaven, der vorzugsweise die Form eines Röhrenautoklaven besitzt, auf, wenn das vorstehend angesprochene Verfahren erfindungsgemäss in der Weise durchgeführt wird, dass das wässerige Polymerisationsgemisch im Autoklaven mit einem Inertgaspolster überlagert wird, dass während der Polymerisation Gas am Kopf des Reaktionsbehälters so abgezogen und Inertgas gegebenenfalls im Gemisch mit Monomer(en) in gasförmigem Zustand im unteren Teil des Reaktionsbehälters so eingeblasen wird, dass der Partialdruck des Inertgases bei mindestens 0,5 und vorzugsweise bis 10, besonders vorzugsweise bei 2 bis 5 bar liegt und das Volumen des unten eingespeisten Gases unter den Reaktionsbedingungen je Stunde 1 bis 100%, vorzugsweise 5 bis 50% des Autoklavenvolumens beträgt.

In einer besonders wegen der einfacheren Durchführung bevorzugten Ausführungsform wird das am Kopf des Autoklaven abgezogene Gas im Kreis geführt und am Autoklavenboden wieder eingeblasen.

Nach dem erfindungsgemässen Verfahren können Dispersionen von VC-Homo- und VC-Copolymeren hergestellt werden, die sich hervorragend zur Bereitung von Organo- oder Plastisolen eignen und die hier vereinfachend als PVC bezeichnet werden. Bei der Herstellung der besagten Copolymeren können andere ethylenisch ungesättigte Verbindungen in Mengen von bis zu 30 Gew.-%, vorzugsweise bis 15 Gew.-%, jeweils bezogen auf Gesamtmonomere, mitverwendet werden. Im allgemeinen werden jedoch Vinylchloridhomopolymere besonders bevorzugt.

Beispiele von geeigneten Comonomeren sind: Vinylester von Carbonsäuren der Formel RCOOH, wobei R Wasserstoff oder gerad- oder verzweigtkettige $C_1$- bis $C_{19}$-Alkylgruppen bedeuten kann, z. B. Vinylformiat, -(n-, iso-) butyrat, bevorzugt Vinylacetat und -propionat; $C_1$- bis $C_8$-Alkylester von $\alpha$, $\beta$-ethylenisch ungesättigten Carbonsäuren mit 3 bis 6 Kohlenstoffatomen im Acylrest, z. B. Methyl-, Ethyl-, (n-, iso-) Propyl-, (n-, sec.-, tert.-) Butylacrylat, -methacrylat und -crotonat; Vinylhalogenide wie Vinylfluorid und -bromid, Vinylidenhalogenide, z. B. Vinylidenchlorid, $\alpha$-Olefine, z. B. Propylen und insbesondere Ethylen, Itacon-, Malein- und Fumarsäure-mono- und/oder -diester mit gesättigten $C_1$- bis $C_8$-Alkoholen, Vinylether, (Meth-) Acrylnitril.

Die PVC-Polymerisate können erfindungsgemäss nach den Rezepturen hergestellt werden, die bereits bekannt sind. Insbesondere sei hier auf die bereits genannten DE-C Nr. 1069387 und EP-A Nr. 16461 verwiesen, deren diesbezügliche Offenbarung Teil der vorliegenden Anmeldung sein soll. Insbesondere die dortigen Ausführungen bezüglich Art und Menge der öl- und der wasserlöslichen Dispergierhilfsstoffe, wie der Emulgatoren, der Schutzkolloide bzw. des speziellen carboxylgruppenhaltigen Polymers, der Radikalinitiatoren und des Wassers gelten auch für das vorliegende erfindungsgemässe Verfahren, so dass zur Straffung der vorliegenden Beschreibung auf eine Wiederholung weitgehend verzichtet werden kann. Bemerkenswert ist, dass das vorliegende Verfahren selbst für die dispergierhilfsstoffarmen (0,5 bis 1 Gew.-%, bezogen auf Monomeres) Dispersionen geeignet ist. Übliche Zusätze wie Puffersysteme und Regler können selbstverständlich auch in üblichen Mengen mitverwendet werden.

Bereits eingangs wurde erwähnt, dass die Reaktionsteilnehmer und -zusätze zunächst in üblicher Weise in Wasser, vorzugsweise im Monomer-Wasser-Gewichtsverhältnis von 0,4:1 bis 2:1, insbesondere 0,6:1 bis 1,5:1 dispergiert bzw. gelöst werden, so dass eine gleichmässige Voremulsion entsteht. Diese Voremulsion wird anschliessend in mindestens einer Homogenisierstufe gegebenenfalls mit zwischengeschalteten Ruhezonen homogenisiert, bis die Monomertröpfchen mittlere Durchmesser von 0,1 bis 3 µm aufweisen. Dabei sind natürlich Abweichungen möglich, aber die Mehrzahl der Teilchen sollten diese Durchmesser besitzen.

Das homogenisierte Reaktionsgemisch wird dann in den Reaktionsbehälter, insbesondere Röhrenautoklaven, d. h. sehr schlanken Autoklaven mit grossem Oberflächen/Volumen-Verhältnis, eingeführt. Der Reaktor besitzt üblicherweise Aussenkühlung (Mantelkühlung).

Der Autoklav wird vor der Beschickung mit der homogenen Reaktionsmischung vorzugsweise bereits sauerstofffrei gespült und besonders vorzugsweise mit Inertgas gefüllt. Jedoch kann die homogenisierte Dispersion auch in den evakuierten Behälter eingebracht werden. Spätestens nach der Befüllung wird der Autoklav mit Inertgas beaufschlagt, d. h. mit einem Gas, das in die Polymerisationsreaktion selbst vorzugsweise nicht oder aber nur in äusserst geringem Ausmass eingreift, auch nicht mit einzelnen Komponenten des Reaktionsgemisches in merklichem Mass reagiert und im Reaktionsmedium vorzugsweise nur in geringem Masse löslich ist. Beispiele für solche Gase sind Fluorchlorkohlenwasserstoffe (sog. Freone® oder Frigene® o. ä.), Edelgase und/oder Stickstoff, der aus Kostengründen und wegen der leichten Zugänglichkeit bevorzugt wird.

Üblicherweise genügt bereits ein Inertgaspartialdruck von 0,5 bar, niedrigere Drücke führen normalerweise nicht zu den überraschenden Vorteilen des erfindungsgemässen Verfahrens. Andererseits ergibt eine Steigerung des Inertgaspartialdruckes über 10 bar hinaus im allgemeinen keine weiteren Vorteile, ist aber natürlich prinzipiell möglich (z. B. bis 20 oder 40 bar). Die obere Grenze wird praktisch nur durch apparative Gegebenheiten gesetzt. Bevorzugt wird mit Inertgaspartialdrucken von 2 bis 5 bar gearbeitet.

Nach dem Befüllen kann sofort begonnen werden, am Kopf des Autoklaven einen Teil des im Autoklavendom befindlichen Gases abzuziehen und unten am Behälter Gas, welches im wesentlichen aus Inertgas besteht, aber gegebenenfalls auch gasförmiges Monomeres enthalten kann, so einzublasen, dass der Inertgasdruck im angegebenen Bereich bleibt.

Innerhalb dieses Druckbereiches kann der Druck durch Steuerung der Gasabzugsmenge und der Menge des eingeblasenen Gases variiert, d. h.

gegebenenfalls mehrfach gesteigert und/oder gesenkt werden, bevorzugt wird er aber während der überwiegenden Reaktionsdauer konstant gehalten.

Das vorstehend angesprochene gasförmige Monomere befindet sich vorzugsweise im Gleichgewicht mit dem dazugehörigen Partialdruck im Reaktionsbehälter. Falls gewünscht, kann aber auf diese Weise auch noch Monomeres, z. B. Vinylchlorid, nachdosiert werden.

Mit dieser beschriebenen «Gasblasenrührung» kann aber auch zu beliebigen späteren Zeitpunkten, beispielsweise nach dem Aufheizen auf Reaktionstemperatur oder nach Reaktionsbeginn begonnen werden. Im allgemeinen wird aber bevorzugt, die «Gasblasenrührung» sofort nach dem Befüllen des Reaktors zu beginnen und bis zur Entleerung der auspolymerisierten Dispersion, zumindest aber bis zur Beendigung der Polymerisation fortzusetzen. Eine bevorzugte für das erfindungsgemässe Verfahren einsetzbare Vorrichtung besteht aus einem stehenden Autoklaven mit Höhen/Innendurchmesserverhältnis von mindestens 2,5, insbesondere einem Röhrenautoklaven, d. h. mit extrem grossem Verhältnis der Höhe zum Innendurchmesser (H/D von etwa 5 bis 10 oder sogar grösser). Dieser Autoklav kann am Dom über Rohrleitungen mit einem Auffangbehälter und einer Vorrichtung zur Abgasreinigung verbunden sein. Desgleichen kann der Autoklav am Boden über mindestens ein Bodenventil und/oder mindestens ein Gaseinleitungsrohr und/oder mindestens einen Gaseinleitungsring und/oder über eine Lochplatte, deren Gaszuführung jeweils mit einem Rückschlagventil versehen ist, mit einem Gasvorratsbehälter verbunden sein, aus dem das zugeführte Gas entnommen wird.

Arbeitet man mit geringen Gasmengen, um die Monomeremulsion besonders schonend zu durchmischen, dann empfiehlt es sich, das Gas aus einer zentralen Gasversorgungsleitung, deren Druck besonders vorzugsweise 2-5 bar über dem Polymerisationsdruck liegt, direkt über z. B. ein Rotameter und eine Rückschlagklappe am Boden in den Autoklaven einzublasen und über eine Druckhalteregelung am Dom des Autoklaven in z. B. einen Gasometer abzuziehen. Zur VC-Rückgewinnung und Abgasreinigung eignet sich z. B. eine Tieftemperaturkondensation mit anschliessender Aktivkohlereinigung. Diese Ausführungsform erfordert nur geringe Investitions- und Betriebskosten.

In einer weiteren vorteilhaften Ausführungsform wird das abgezogene Gas allerdings nicht nach Reinigung abgelassen, sondern mit einer hierfür üblichen Vorrichtung, z. B. einer Gaspumpe, wie einer Gasmembranpumpe oder -kolbenpumpe, wieder verdichtet und über Rohrleitungen in den genannten Gasvorratsbehälter eingebracht. Bei einer solchen bevorzugten Führung des Inertgases im Kreis kann auch auf Auffang- und/oder Vorratsbehälter verzichtet werden. Des gleichmässigeren Gasstromes wegen wird aber bevorzugt wenigstens einer der genannten Behälter, vorzugsweise der Vorratsbehälter oder ein Windkessel in oder an den Gaskreislauf zumindest zeitweise geschaltet. In ihm kann beispielsweise auch nach Beendigung der Polymerisation das Inertgas aufbewahrt werden, so dass es für weitere Reaktionscyclen wieder verwendet werden kann. Dies ist z. B. aus Gründen der Umwelt- und Arbeitsplatzhygiene und wegen des Wegfalls der Notwendigkeit, grössere Gasmengen zu reinigen, bevorzugt. Zum Ausgleich eventuell doch auftretender Verluste an Gas ist selbstverständlich eine übliche Einspeisvorrichtung vorgesehen, die nicht weiter erläutert werden muss.

Die Gasverdichtungsvorrichtung ist selbstverständlich für den Betriebsdruck des Reaktionssystems ausgelegt und soll den Druck des Gases so weit erhöhen, dass zumindest, vorzugsweise gerade der hydrostatische Druck des Reaktionsgemisches überwunden wird. Auf diese Weise wird gewährleistet, dass unten am Autoklaven ein gleichmässiger Gasstrom eingeblasen wird, so dass die Dispersion durch die im Reaktionsgemisch aufsteigenden Gasblasen äusserst schonend und scherarm und vorzugsweise über den gesamten Querschnitt des Reaktors weitgehend gleichmässig durchmischt wird.

Das Gas wird, wie bereits kurz angesprochen, über Bodenventile, Gaseinleitungsrohre, Gasverteilerplatten (z. B. Lochböden) und/oder Gaseinleitungsringe (im allgemeinen ein Hohlring mit in gleichmässigen Abständen angebrachten Bohrungen) im unteren Teil des Autoklaven eingeblasen. Im allgemeinen reicht bei Röhrenautoklaven eine solche Einrichtung, insbesondere ein Bodenventil, eine Lochplatte oder ein Gaseinleitungsrohr, wobei diese Gaseinblasstelle vorzugsweise direkt am oder direkt über dem Boden (vorzugsweise am tiefsten Punkt des Behälters) liegt. Weitere können an anderen Stellen des Autoklaven angebracht sein.

Wesentlich für die Lage dieser Einblasstellen ist jedoch (dies gilt für alle Vorrichtungen), dass sich keine Toträume bilden, d. h. Bereiche innerhalb der Reaktionsmischung, die nicht gerührt werden. Die optimale Einblasstelle hängt von der jeweiligen Geometrie des Reaktionsbehälters sowie der Viskosität des Rührmediums ab und kann in einigen wenigen Versuchen (beispielsweise am Modell oder im Technikumsmassstab) vom Fachmann leicht bestimmt werden. Normalerweise liegen diese Stellen im unteren Viertel der Reaktorhöhe. Ein mögliches Beispiel für einen Autoklaven mit H/D von mindestens 2,5 sei genannt: Ein Bodenventil im Zentrum des Autoklavenbodens und ein zentrisch angeordneter Gaseinleitungsring mit einem Durchmesser von etwa $\frac{2}{3}$ des Innendurchmessers D des Autoklaven in solch einer Höhe über dem Boden angebracht, dass sein Abstand vom Boden seinem Abstand von der zylindrischen Autoklavenseitenwand entspricht.

Die lichte Weite der Gaseintrittsöffnungen in das Reaktionsmedium sollte bei vorgegebener Gasmenge pro Zeiteinheit vorzugsweise so bemessen sein, dass vorzugsweise kein Düseneffekt und damit vorzugsweise kein Gasstrahl in der Flüssigkeit auftritt, sondern dass vorzugsweise die Rührung allein durch die aufsteigenden, durch das Reaktionsgemisch durchperlenden Gasblasen erreicht wird. Die Zuleitungen zu besagten Gaseintrittsöffnungen können selbstverständlich senkrecht von oben oder unten, waagrecht oder schräg eingebaut sein, ihr Querschnitt wie auch die Grösse der Gaseintrittsöffnung(en) und die Dimension der restlichen Inertgasumwälzapparatur richten sich nach der Grösse des Autoklaven und der umgepumpten Gasmenge. Diese Dimensionen können vom Fachmann mit wenigen einfachen Versuchen optimiert werden.

In die Abgasleitung vom Autoklavendom zum Gasauffangbehälter bzw. zur Saugseite des Gasverdichters kann, falls dies gewünscht wird, auch ein Kühler, gegebenenfalls in Verbindung mit einem Abscheider (z. B. für kondensiertes Monomeres) eingebaut sein. Überraschenderweise bildet sich praktisch kein Schaum und auch die Menge mitgeführten Monomers ist im allgemeinen gering.

Ergänzend zu den genannten Rezepturen sei lediglich noch erwähnt, dass für das erfindungsgemässe Verfahren insbesondere Mischungen aus schnell und langsam zerfallenden Initiatoren günstig sind, wobei das Gewichtsverhältnis dieser Initiatoren vorzugsweise zwischen 10:1 und 1:10 liegt.

Beispiele für geeignete Kombinationen sind Gemische aus Dilauroylperoxid mit Di-2-ethylhexyl-peroxodicarbonat, mit Bis(3,5,5)trimethylhexanoylperoxid, mit Didecanoylperoxid oder 2,2'-Azobis-(2,4-dimethyl)-valeronitril. Diese genannten Verbindungen können natürlich auch in Form von Dispersionen gemäss der DE-A Nr. 2629367 und/oder einzeln eingesetzt werden.

Nach Beendigung der Polymerisation kann gegebenenfalls der Restmonomergehalt in bekannter Weise reduziert werden. Als Beispiele für geeignete Verfahren sei lediglich auf die EP-A Nr. 2820 und die DE-A Nr. 2722952 (& US Nr. 4128516) verwiesen. Das Polymerisat kann aus der Polymerdispersion nach bekannten Trocknungsmethoden gewonnen werden, z. B. durch Sprühtrocknen oder durch Aufarbeitung auf Saugzellenfiltern.

Die erfindungsgemäss hergestellten Polymerisate lassen sich mit üblichen Weichmachern und üblichen Zusätzen wie Stabilisatoren etc. zu Plastisolen verarbeiten und entsprechen in ihren Eigenschaften zumindest den Produkten, die nach den bekannten Verfahren durch Polymerisation homogenisierter Monomerdispersionen mit anschliessender Entfernung von Grobanteilen erhalten werden.

Gegenüber diesen bekannten Verfahren liefert das erfindungsgemässe mit grösserer Raum-Zeit-Ausbeute PVC gleichmässigerer Qualität mit weniger Verlusten an nicht spezifikationsgerechtem Polymerisat durch Vermindern des Wandbelags und durch Reduktion von Griesanteilen, woraus im allgemeinen überdies eine bessere Latexstabilität resultiert. Aufgrund des geringeren Wandbelags ist es sogar möglich, das erfindungsgemässe Verfahren nicht nur, wie dies bevorzugt ist, diskontinuierlich, sondern auch halbkontinuierlich oder sogar im kontinuierlichen Taktverfahren durchzuführen.

Die folgenden Beispiele und Vergleichsversuche sollen das Verfahren weiter erläutern. Die genannten Mengen und Prozentangaben beziehen sich, sofern nichts anderes angegeben, stets auf das Gewicht.

*Vergleichsversuch A:*

1260 kg Vinylchlorid wurden mit 1300 kg 1%iger wässeriger, ammoniakalischer Lösung (pH = 9,5) hydroxylierter $C_{12}$-$C_{20}$-Fettsäuren und 3 kg Dilauroylperoxid mittels einer Homogenisiermaschine in eine feinteilige Vinylchlorid-in-Wasser-Emulsion umgewandelt, deren Monomertröpfchen im wesentlichen Durchmesser im Bereich von 0,1 μm bis 3 μm besassen.

Die Monomeremulsion wurde in einen evakuierten Röhrenautoklaven (H = 6 m, D = 0,8 m) gebracht und auf 50° C aufgeheizt. 15 h nach Erreichen der Innentemperatur war die Polymerisation, erkennbar am Druckabfall, beendet. Es wurde entspannt und der Polyvinylchloridlatex abgelassen. Der Latex war stabil, enthielt wenig Koagulat und hatte einen Feststoffgehalt von 47%. Die Autoklavenwand war gleichmässig mit einer 0,5 cm dikken Wandbelagsschicht bedeckt, welche durch eine Druckwasserreinigung entfernt werden musste. Der Latex wurde entgast und durch eine Saugfiltration mit anschliessender Trocknung des Filterkuchens aufgearbeitet. Der K-Wert des Produktes nach Fikentscher lag bei 70, die Pastenviskosität des Pulvers mit Diethylhexylphthalat im Gewichtsverhältnis 60:40 lag nach 24 h bei 2500 mPas bei einem Schergefälle von $1,4\,s^{-1}$. Der bei der Hochdruckabwasserreinigung abgelöste und nass ausgewogene Wandbelag hatte ein Gewicht von 18 kg.

*Beispiel 1:*

Es wurde der gleiche Polymerisationsansatz, wie im Vergleichsversuch A beschrieben, hergestellt und unter den gleichen Bedingungen polymerisiert mit der Ausnahme, dass diesmal das Homogenisat so in den mit Stickstoff gefluteten Autoklaven gefüllt wurde, dass sich unter Polymerisationsbedingungen ein Stickstoffpartialdruck von 3 bar einstellte und dass erfindungsgemäss während der Polymerisation das Inertgas mittels einer Gasmembranpumpe in einer Menge von 10% des Autoklavenvolumens je Stunde im Kreislauf durch den Polymerisationsansatz geleitet wurde. Nach 11 h ab Erreichen der Solltemperatur war die Polymerisation beendet, es wurde entspannt und der Latex abgelassen. Der Latex war nach dem Entgasen stabil, enthielt kein Koagulat und hatte einen Feststoffgehalt von 48%. Die Autoklavenwand war von einer dünnen Schicht von Latexrückständen weisslich überzogen und konnte durch einfaches Abspülen mit Wasser gereinigt werden. Wandbeläge, welche durch eine Druckwasserreinigung entfernt werden müssten, waren nicht vorhanden, und der Autoklav wurde ohne vorherige Druckwasserreinigung nach dem gleichen erfindungsgemässen Verfahren und mit dem gleichen Ergebnis wieder angesetzt.

Die Latexrückstände hatten jeweils ein Gewicht von 120 g (nass ausgewogen).

Die Latices der beiden ohne Druckwasserreinigung nach dem erfindungsgemässen Verfahren nacheinander angesetzten Polymerisationen wurden,wie im Vergleichsversuch A beschrieben, aufgearbeitet. Es wurden K-Werte von 70 und Pastenviskositäten von 2400 und 2500 mPas gemessen. Das Beispiel verdeutlicht, dass nach dem erfindungsgemässen Verfahren ohne Änderung der Produkteigenschaften unter Vermeidung von nur durch Druckwasserreinigung entfernbaren Wandbelägen eine überraschende Verbesserung der Raumzeitleistung erreicht wird.

*Vergleichsversuch B:*

Es wurde der gleiche Polymerisationsansatz, wie im Vergleichsversuch A beschrieben, durchgeführt und unter den gleichen Bedingungen polymerisiert und aufgearbeitet mit der Ausnahme, dass statt 3 kg Dilauroylperoxid nur 2,5 kg Dilauroylperoxid und 0,25 kg Di-2-ethylhexylperoxodicarbonat eingesetzt wurden. 14 h nach dem Erreichen der Solltemperatur war die Polymerisation beendet, der Latex war stabil, fast ohne Koagulat und mit einem Feststoffgehalt von 46%. Die Autoklavenwand war mit einer ca. 0,5 cm dikken Polymerkruste (ca. 19 kg) bedeckt und musste mit Druckwasser gereinigt werden. Der K-Wert des Produktes lag bei 70 und die Pastenviskosität bei 2600 mPas.

*Beispiel 2:*

Es wurde der gleiche Polymerisationsansatz, wie im Vergleichsversuch B beschrieben, durchgeführt und unter erfindungsgemässen Bedingungen mit Inertgaspolster und unter Umpumpen des Inertgases, wie im Beispiel 1 beschrieben, polymerisiert und aufgearbeitet. 9 h nach Erreichen der Innentemperatur war die Polymerisation beendet, und nach dem Ablassen des Latex wurde der Autoklav ohne Druckwasserreinigung (lediglich nach Ausspülen mit Wasser) erneut gemäss der ersten Charge mit gleichem Ergebnis angesetzt. Die Latices waren stabil, ohne Koagulat, mit Feststoffgehalten von 47 und 46%. Die K-Werte lagen bei 70 und die Pastenviskositäten bei 2500 mPas. Die Beispiele verdeutlichen, dass nach dem erfindungsgemässen Verfahren dem konventionellen Suspensionsverfahren ähnliche Polymerisationszeiten erreicht werden.

*Vergleichsversuch C:*

Es wurde der gleiche Polymerisationsansantz, wie im Vergleichsversuch A beschrieben, hergestellt und in einem 3 m³ - Rührautoklaven auspolymerisiert.

Der Rührautoklav war mit einem Blattrührer ausgerüstet, welcher sich mit 40 min⁻¹ drehte. 13 h nach Erreichen der Innentemperatur war die Polymerisation, erkennbar am Druckabfall, beendet. Der Latex war wenig stabil und koagulierte beim Entgasen. Die Wandbelagsmenge lag nach der Reinigung mit Hochdruckwasser bei 28 kg.

Das Produkt war zur Pastenbildung nicht geeignet.

Die erfindungsgemässe «Glasblasenrührung» eignet sich auch bei der Herstellung von scherempfindlichen Latices anderer ethylenisch ungesättigter Monomeren z. B. von vorstehend genannten Comonomeren allein oder im Gemisch mit oder ohne VC nach dem Emulsions- oder Mikrosuspensionsverfahren.

## Patentansprüche

1. Verfahren zur Herstellung von Vinylchlorid-Polymerisaten durch Polymerisation von Vinylchlorid gegebenenfalls zusammen mit bis zu 30 Gew.-% mindestens eines mit Vinylchlorid copolymerisierbaren Monomeren nach dem Mikrosuspensionsverfahren, das im wesentlichen 3 Verfahrensschritte beinhaltet:
1. Dispergieren des Monomeren(gemisches) in Wasser in Gegenwart von 0,1 bis 3 Gew.-% an üblichen Dispergierhilfsstoffen und von 0,001 bis 3 Gew.-% üblichen monomerlöslichen Radikalbildnern, wobei sich die Mengenangaben jeweils auf das Gesamtgewicht des Monomeren(gemisches) beziehen,
2. Homogenisieren der Dispersion derart, dass im wesentlichen Monomertröpfchen mit einem mittleren Durchmesser von 0,1 bis 3 µm entstehen, und
3. Polymerisieren dieser Dispersion unter erhöhtem Druck im stehenden Autoklaven bei erhöhter Temperatur, dadurch gekennzeichnet, dass das wässerige Polymerisationsgemisch im Autoklaven mit einem Inertgaspolster überlagert wird, dass während der Polymerisation Gas am Kopf des Reaktionsbehälters so abgezogen und Gas, im wesentlichen Inertgas, im unteren Teil des Reaktionsbehälters so eingeblasen wird, dass der Partialdruck des Inertgases bei mindestens 0,5 und vorzugsweise bis 10 bar liegt und das Volumen des unten eingespeisten Gases unter den Reaktionsbedingungen je Stunde 1 bis 100% des Autoklavenvolumens beträgt.

2. Verfahren nach Anspruch 1, dadurch gekennzeichnet, dass der Partialdruck des Inertgaspolsters im Autoklaven während der Polymerisation 2 bis 5 bar beträgt.

3. Verfahren nach Anspruch 1 oder 2, dadurch gekennzeichnet, dass das am Kopf des Autoklaven abgezogene Gas im Kreislauf geführt und am Autoklavenboden wieder eingeblasen wird.

4. Verfahren nach Anspruch 1 oder 2, dadurch gekennzeichnet, dass das Inertgas aus einer zentralen Gasversorgungsleitung am Boden des Autoklaven eingeblasen und am Dom über eine Druckhalteregelung in einen Gasometer abgeführt wird.

5. Verfahren nach einem der vorangehenden Ansprüche, dadurch gekennzeichnet, dass während der Polymerisation je Stunde 5-50% des Autoklavenvolumens (unter den Polymerisationsbedingungen) eingeblasen werden.

6. Verfahren nach einem der vorangehenden Ansprüche, dadurch gekennzeichnet, dass ein Röhrenautoklav verwendet wird.

7. Vorrichtung zur Durchführung des Verfahrens nach Anspruch 1, dadurch gekennzeichnet, dass der Autoklav ein Höhen/Innendurchmesser-Verhältnis von mindestens 2,5 besitzt, am Dom über Rohrleitung mit einer Gasauffangvorrichtung verbunden ist u. im unteren Teil eine Gaseinblaseinrichtung besitzt, die aus mindestens einem Bodenventil, Gaseinleitungsrohr, Gaseinleitungsring und/oder mindestens einer Gasverteilungsplatte besteht, in der Zuführung ein Rückschlagventil besitzt und mit einem Gasvorratsbehälter verbunden ist.

8. Vorrichtung zur Durchführung des Verfahrens nach Anspruch 3, dadurch gekennzeichnet, dass der Autoklav ein Höhen/Innendurchmesser-Verhältnis von mindestens 2,5 besitzt, dessen Dom mit einer Gasabzugsleitung u. der im unteren Teil mit einer Gaseinblasvorrichtung versehen ist, wobei besagte Gasabzugsleitung mit der Saugseite eines Verdichters und besagte Gaseinblasvorrichtung mit der Druckseite des Verdichters verbunden sind, in die Gaszuführung ein Rückschlagventil eingebaut ist und die Gaseinblasvorrichtung aus mindestens einem Bodenventil, Gaseinleitungsrohr, Gaseinleitungsring und/oder mindestens einer Gasverteilungsplatte besteht.

## Revendications

1. Procédé de préparation de polymères du chlorure de vinyle par polymérisation du chlorure de vinyle, éventuellement avec jusqu'à 30% en poids d'au moins un monomère copolymérisable avec le chlorure de vinyle, par la méthode en microsuspension, procédé qui comprend essentiellement trois étapes opératoires, à savoir:

1. mise en dispersion du monomère ou du mélange de monomères dans de l'eau en présence de 0,1 à 3% en poids d'adjuvants de dispersion usuels et de 0,001 à 3% en poids de générateurs de radicaux usuels solubles dans les monomères, les pourcentages indiqués étant rapportés à chaque fois au poids total du monomère ou du mélange de monomères,

2. homogénéisation de la dispersion de telle façon qu'il se forme essentiellement des gouttelettes de monomère ayant des diamètres moyens de 0,1 à 3 µm, et

3. polymérisation de cette dispersion dans un autoclave vertical, sous pression élevée et à température élevée,
procédé caractérisé en ce qu'on recouvre d'un gaz inerte le mélange de polymérisation aqueux dans l'autoclave et, au cours de la polymérisation, on retire du gaz à la tête du récipient réactionnel et on insuffle du gaz, essentiellement un gaz inerte, à la partie inférieure du récipient réactionnel, cela à des débits tels que la pression partielle du gaz inerte soit d'au moins 0,5 bar et, de préférence, d'au plus 10 bar et que le volume de gaz introduit par heure représente, dans les conditions de la réaction, de 1 à 100% du volume de l'autoclave.

2. Procédé selon la revendication 1, caractérisé en ce que la pression partielle de l'atmosphère de gaz inerte dans l'autoclave, au cours de la polymérisation, est comprise entre 2 et 5 bar.

3. Procédé selon l'une des revendications 1 ou 2, caractérisé en ce que le gaz retiré à la tête de l'autoclave est conduit en circuit et est à nouveau insufflé au fond de l'autoclave.

4. Procédé selon l'une des revendications 1 ou 2, caractérisé en ce que le gaz inerte, provenant d'une conduite d'alimentation centrale, insufflé au fond de l'autoclave est extrait du dôme par un dispositif de maintien de la pression, pour être envoyé dans un gazomètre.

5. Procédé selon l'une quelconque des revendications précédentes, caractérisé en ce qu'on insuffle, par heure, au cours de la polymérisation, de 5 à 50% du volume de l'autoclave (dans les conditions de la polymérisation).

6. Procédé selon l'une quelconque des revendications précédentes, caractérisé en ce qu'on utilise un autoclave tubulaire.

7. Appareil pour l'exécution du procédé selon la revendication 1, appareil caractérisé en ce que le rapport entre la hauteur et le diamètre intérieur de l'autoclave est d'au moins 2,5, le dôme de l'autoclave est relié, par une conduite tubulaire, à un appareil collecteur de gaz, et l'autoclave comporte, à sa partie inférieure, un dispositif d'insufflation de gaz qui est constitué d'au moins une soupape de fond, d'un tube d'admission de gaz, d'un anneau d'admission de gaz et/ou d'au moins une plaque distributrice de gaz dont l'admission est munie d'un clapet antiretour et qui est relié à un réservoir de gaz.

8. Appareil pour l'exécution du procédé selon la revendication 3, appareil caractérisé en ce que le rapport entre la hauteur de l'autoclave et son diamètre intérieur est d'au moins 2,5, l'autoclave est muni, à son dôme, d'une conduite de prélèvement de gaz et, à sa partie inférieure, d'un dispositif d'insufflation de gaz, ladite conduite de prélèvement de gaz étant reliée au côté aspiration d'un compresseur et ledit dispositif d'insufflation de gaz étant relié au côté pression du compresseur, un clapet antiretour est incorporé dans la conduite d'amenée du gaz et le dispositif d'insufflation de gaz est constitué d'au moins une soupape de fond, d'un tube d'admission de gaz, d'un anneau d'admission de gaz et/ou d'au moins une plaque distributrice de gaz.

## Claims

1. Process for manufacturing vinyl chloride polymers by polymerising vinyl chloride according to the microsuspension process, optionally together with up to 30% by weight of at least one monomer that is copolymerisable with vinyl chloride, which process essentially comprises three process steps—

1. dispersion of the monomer (mixture) in water in the presence of from 0.1 to 3% by weight of customary dispersion auxiliaries and from 0.001 to 3% by weight of customary monomer-soluble radical-forming agents, the amounts referring, in each case, to the total weight of the monomer (mixture);

2. homogenisation of the dispersion in such a manner that monomer droplets mostly having a mean diameter of from 0.1 to 3 μm are obtained, and

3. polymerisation of the dispersion in a vertical autoclave at elevated pressure and elevated temperature,

characterised in that an inert-gas cushion is maintained over the aqueous polymerisation mixture in the autoclave and, during polymerisation, gas is drawn off at the head of the reaction vessel, and gas, substantially inert gas, is blown into the lower portion of the reaction vessel, in such a manner that the partial pressure of the inert gas is at least 0.5 bar, preferably up to 10 bar, and the volume of the gas fed in at the bottom is, under the reaction conditions, from 1 to 100% of the autoclave volume per hour.

2. Process according to Claim 1, characterised in that, during polymerisation, the partial pressure of the inert-gas cushion in the autoclave is from 2 to 5 bar.

3. Process according to Claim 1 or Claim 2, characterised in that the gas drawn off at the head of the autoclave is conveyed in a loop and blown in again at the bottom of the autoclave.

4. Process according to Claim 1 or Claim 2, characterised in that the inert gas is blown in from a central gas supply conduit at the bottom of the autoclave and is drawn off at the dome via a pressure-maintaining device into a gasometer.

5. Process according to one of the preceding claims, characterised in that, during polymerisation, from 5 to 50% of the volume of the autoclave (under the conditions of polymerisation) is blown in per hour.

6. Process according to one of the preceding claims, characterised in that a tubular autoclave is used.

7. Apparatus for carrying out the process according to Claim 1, characterised in that the autoclave has a height/internal diameter ratio of at least 2.5, is connected at its dome, via a conduit, to a gas-collecting device, and has, in its lower portion, a device for blowing in gas, which comprises at least one bottom valve, a gas-inlet tube, a gas-inlet ring and/or at least one gas distribution plate, has a non-return valve in the feed, and is connected to a gas-supply vessel.

8. Apparatus for carrying out the process according to Claim 3, characterised in that the autoclave has a height/internal diameter ratio of at least 2.5, and, in its lower portion, is provided with a device for blowing in gas, and the dome of which is provided with a gas-exhaust line, the said gas-exhaust line being connected to the suction side of a compressor and the said device for blowing in gas being connected to the pressure side of the compressor, a non-return valve being incorporated into the gas feed, and the device for blowing in gas comprising at least one bottom valve, gas-inlet tube, gas-inlet ring and/or at least one gas-distribution plate.